Europäisches Patentamt

European Patent Office

Office européen des brevets

(19)

(11) **EP 1 116 185 B1**

(12) **FASCICULE DE BREVET EUROPEEN**

(45) Date de publication et mention
de la délivrance du brevet:
**08.01.2003 Bulletin 2003/02**

(51) Int Cl.⁷: **G06T 9/00**

(86) Numéro de dépôt international:
**PCT/FR99/02323**

(21) Numéro de dépôt: **99970191.5**

(22) Date de dépôt: **30.09.1999**

(87) Numéro de publication internationale:
**WO 00/021035 (13.04.2000 Gazette 2000/15)**

(54) **METHODE DE COMPRESSION ET DE CODAGE D'UN RESEAU MAILLE TRIDIMENSIONNEL**

KOMPRESSION- UND KODIERUNGSVERFAHREN EINES 3D MASCHENNETZWERKS

METHOD FOR COMPRESSING AND ENCODING THREE-DIMENSIONAL MESHED NETWORK

(84) Etats contractants désignés:
**AT BE CH CY DE DK ES FI FR GB GR IE IT LI LU MC NL PT SE**

(30) Priorité: **02.10.1998 FR 9812525**

(43) Date de publication de la demande:
**18.07.2001 Bulletin 2001/29**

(73) Titulaires:
• **FRANCE TELECOM SA**
**75015 Paris (FR)**
• **TELEDIFFUSION DE FRANCE, société anonyme**
**75015 Paris (FR)**

(72) Inventeurs:
• **LAURENT-CHATENET, Nathalie**
**F-35630 Vignoc (FR)**
• **LECHAT, Patrick**
**F-35000 Rennes (FR)**
• **SANSON, Henri**
**F-35690 Acigne (FR)**

(74) Mandataire: **Bentz, Jean-Paul et al**
**Cabinet Ballot**
**4 rue du Général Hoche**
**BP 855**
**56100 Lorient (FR)**

(56) Documents cités:
• **JIANKUN LI ET AL: "Progressive coding of 3-D graphic models" PROCEEDINGS OF THE IEEE, JUNE 1998, IEEE, USA, vol. 86, no. 6, pages 1052-1063, XP002106798 ISSN 0018-9219**

• **SALEMBIER P ET AL: "VERY LOW BIT RATE VIDEO CODING USING ACTIVE TRIANGULAR MESH" 1996 IEEE INTERNATIONAL CONFERENCE ON ACOUSTICS, SPEECH, AND SIGNAL PROCESSING - PROCEEDINGS. (ICASSP), ATLANTA, MAY 7 - 10, 1996, vol. 4, no. CONF. 21, 7 mai 1996 (1996-05-07), pages 2060-2063, XP000681654 INSTITUTE OF ELECTRICAL AND ELECTRONICS ENGINEERS**

• **YAO WANG ET AL: "Use of two-dimensional deformable mesh structures for video coding. II. The analysis problem and a region-based coder employing an active mesh representation" IEEE TRANSACTIONS ON CIRCUITS AND SYSTEMS FOR VIDEO TECHNOLOGY, DEC. 1996, IEEE, USA, vol. 6, no. 6, pages 647-659, XP002106799 ISSN 1051-8215**

• **LEE O ET AL: "Non-uniform image sampling and interpolation over deformed meshes and its hierarchical extension" VISUAL COMMUNICATIONS AND IMAGE PROCESSING '95, TAIPEI, TAIWAN, 24-26 MAY 1995, vol. 2501, pt.1, pages 389-400, XP002106800 ISSN 0277-786X, Proceedings of the SPIE - The International Society for Optical Engineering, 1995, USA**

• **LECHAT P ET AL: "Image approximation by minimization of a geometric distance applied to a 3D finite elements based model" PROCEEDINGS OF INTERNATIONAL CONFERENCE ON IMAGE PROCESSING, SANTA BARBARA, CA, USA, 26-29 OCT. 1997, pages 724-727 vol.2, XP002106801 ISBN 0-8186-8183-7, 1997, Los Alamitos, CA, USA, IEEE Comput. Soc, USA**

- LABELLE L ET AL: "Computation of image representation based on active triangular meshes through geometrical surface evolution" VISUAL COMMUNICATIONS AND IMAGE PROCESSING '97, SAN JOSE, CA, USA, 12-14 FEB. 1997, vol. 3024, pt.2, pages 843-854, XP002106817 ISSN 0277-786X, Proceedings of the SPIE - The International Society for Optical Engineering, 1997, USA

- LEE W -F ET AL: "Two-dimensional split and merge algorithm for image coding" VISUAL COMMUNICATIONS AND IMAGE PROCESSING '95, TAIPEI, TAIWAN, 24-26 MAY 1995, vol. 2501, pt.1, pages 694-704, XP002106802 ISSN 0277-786X, Proceedings of the SPIE - The International Society for Optical Engineering, 1995, USA

**Description**

La présente invention se situe dans le domaine du codage d'images fixes ou animées à réduction de débit (compression).

Les techniques de compression d'images sont de manière classique utilisées pour réduire le débit des signaux numériques vidéo en vue de leur transmission ou de leur stockage. Le procédé de codage proposé dans la présente demande est particulièrement adapté aux transmissions à faible débit ainsi qu'aux transmissions sans garantie de débit, telles que celles réalisées à protocole IP (internet Protocol).

Il existe de nombreux procédés de codage d'images fixes ou animées à réduction de débit. Les plus connus sont ceux ayant donné lieu à une norme tels que ISO-JPEG ou ISO-MPEG.

Ces procédés de codage font appel à des principes généraux de compression exploitant, dans les images fixes (JPEG), la redondance spatiale interne à une image, les corrélations entre points voisins et la moindre sensibilité de l'oeil aux détails fins, et la redondance temporelle entre images successives dans les images animées (MPEG).

Dans ce type de procédé, l'image subit tout d'abord une transformation par application d'une Transformée en Cosinus Discrète (DCT) sur des blocs de l'image ou par application d'une Transformée par Ondelettes sur l'image entière. Le signal résultant est ensuite quantifié de manière à limiter le nombre de valeurs possibles du signal, puis codé au moyen d'un codage entropique utilisant les redondances statistiques du signal quantifié afin de réduire la quantité de données à transmettre ou à stocker.

Ces procédés qui sont classiques, présentent cependant plusieurs limitations, dues notamment à l'utilisation de techniques ne tenant pas compte du contenu de l'image et à leur caractère purement numérique:

- des sur-oscillations dues à des effets de bloc dans le cas de la transformée en cosinus discrète apparaissent au voisinage des contours de l'image; ces sur-oscillations apparaissent également dans le cas d'ondelettes à bas débit;

- ces techniques se prêtent mal aux manipulations géométriques (homothétie,...), lesquelles sont classiquement utilisées pour déterminer la compensation de mouvement entre deux images dans le cas d'images animées (MPEG) ou pour réaliser l'intégration d'images de synthèse dans des scènes naturelles.

Il existe également des procédés agissant directement dans le domaine spatial de l'image et consistant à générer une surface photométrique caractérisant chaque composante chromatique de l'image en sélectionnant directement des pixels caractéristiques de l'image, l'obtention des autres pixels de l'image s'effectuant par interpolation des pixels caractéristiques.

Bien qu'offrant de vastes possibilités en terme de manipulation géométrique, ces procédés se révèlent cependant très décevants en terme de compression. Par ailleurs, ils ne permettent pas d'obtenir un volume de données en fin de codage qui soit adapté à la complexité de l'image et à la qualité de représentation voulue, contrairement au codage par ondelettes. En particulier, ces procédés ne permettent pas d'obtenir une image de qualité acceptable surtout lorsque le débit est faible.

Il existe par ailleurs des procédés de codage utilisant un maillage hiérarchique comportant une pluralité de maillages emboîtés comme décrit dans l'article intitulé "Progressive coding of 3-D graphic models", proceedings of the IEEE, juin 1998, IEEE, USA, vol 86, n°6, pages 1052-1063. Le procédé se base sur un critère de voisinage et distingue les arêtes non essentielles, coplanaires avec leur voisinage, et les arêtes visuellement importantes, qui sont significativement différentes de leur voisinage. Les valeurs de position sont codées en tant qu'attributs des arêtes. Pour limiter le nombre de bits à la fin du procédé de codage, les données de structure du maillage et les attributs des sommets du maillage sont codés en se rapportant à des tableaux.

Un but de l'invention est de proposer un autre procédé de codage permettant de pallier les inconvénients précités.

L'invention a pour objet un procédé de codage d'une image numérique visant à produire un train binaire représentatif de ladite image, la longueur du train binaire étant fonction de la qualité de représentation voulue, caractérisé en ce qu'il comporte les étapes suivantes:

a) définir, sur le domaine de l'image à coder, un maillage hiérarchique comportant une pluralité de maillages emboîtés dont les sommets de mailles sont des pixels de ladite image;

b) déterminer, pour chaque maille dudit maillage hiérarchique, un écart de luminance entre l'image à coder et une image interpolée obtenue à partir des sommets du maillage emboîté auquel appartient la maille considérée, et

c) introduire dans le train binaire les valeurs de position, de luminance et de chrominance des sommets des mailles dont l'écart de luminance est supérieur à un écart seuil.

Le maillage hiérarchique est de préférence obtenu par subdivisions régulières et successives des mailles d'un maillage de base grossier.

Pour traiter plus facilement les valeurs de position, de luminance et de chrominance des sommets des mailles, le procédé de l'invention comporte avantageusement une étape de réalisation d'une structure en arbre associé audit maillage hiérarchique.

Selon un mode un mode de réalisation particulier, l'étape c) est réitérée plusieurs fois avec des écarts seuils de plus en plus faibles de manière à générer à chaque itération un groupe de bits venant améliorer la qualité de représentation.

Dans le souci de réduire la taille du train binaire, les valeurs à introduire dans le train binaire font l'objet d'une opération de quantification et de compression préalable.

Enfin, selon un autre mode de réalisation particulier, on prévoit également d'optimiser la position des sommets du maillage multiple et les valeurs de luminance et de chrominance associées afin d'augmenter encore la qualité de représentation du train binaire.

D'autres caractéristiques et avantages de l'invention apparaîtront à la lecture de la description détaillée qui suit et qui est faite en référence aux figures annexées, parmi lesquelles:

- la figure IA montre un maillage multiple à trois niveaux;
- la figure 1B montre la subdivision d'un triangle $T_1$ en quatre triangles de niveau inférieur;
- la figure 2 représente la partie d'arbre associé au triangle $T_1$ de la figure 1B;
- la figure 3 montre la structure de l'arbre associé au maillage multiple;
- la figure 4 montre la partie de l'arbre à introduire dans le train binaire;
- la figure 5 illustre la détermination des valeurs différentielles à introduire dans le train binaire après quantification;
- la figure 6 illustre une opération de compression arithmétique;
- la figure 7 illustre une opération d'optimisation de la position des sommets d'un niveau de maillage et sa propagation au niveau de maillage supérieur;
- la figure 8A illustre un cas où une opération d'inversion de diagonale est exclus; et
- la figure 8B illustre un cas où une opération d'inversion de diagonale est possible.

Nous considérerons dans la suite de l'exposé une image à coder dont les pixels sont repérés dans l'espace par une abscisse x et une ordonnée y. Une composante de luminance Y et deux composantes chromatiques U et V sont associées à chaque pixel. On aurait pu tout aussi bien utiliser à la place des composantes Y, U et V les composantes colorimétriques RVB, HSV.

Selon une première étape a) du procédé de l'invention, on définit tout d'abord, sur le domaine de l'image à coder, un maillage hiérarchique comportant une pluralité de maillages emboîtés. Les sommets des mailles desdits maillages sont des pixels de l'image à coder. Ce maillage hiérarchique est obtenu par exemple par subdivisions régulières et successives des mailles d'un maillage de base grossier. A noter que le terme "noeud" de maillage n'est pas employé pour éviter toute confusion avec les noeuds de l'arbre qui sera associé audit maillage.

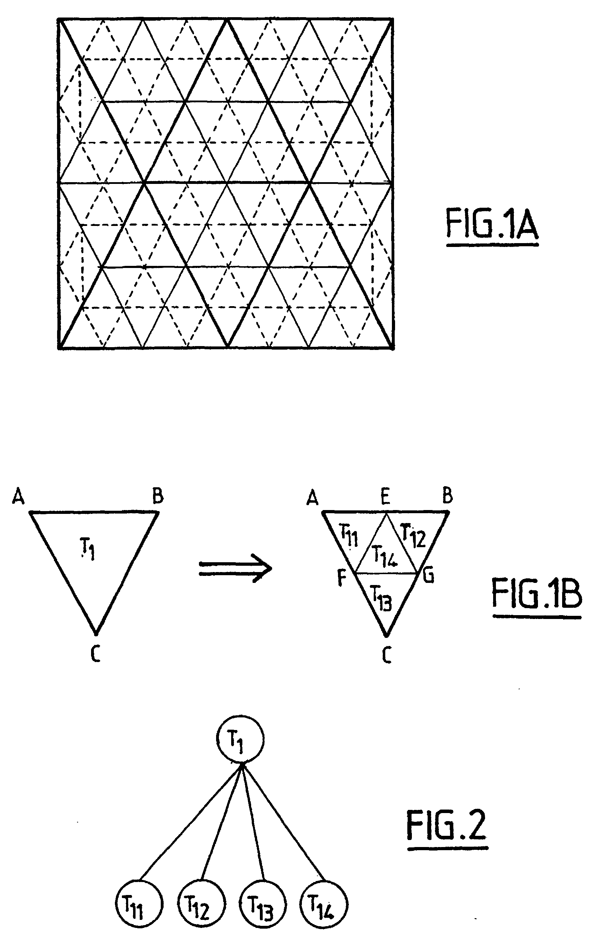

Un exemple de maillage hiérarchique triangulaire comportant trois maillages emboîtés est illustré à la figure 1A. Il comporte un maillage de base comportant 10 mailles et 8 sommets de mailles.

Le maillage de base, représenté en trait plein épais sur la figure 1A, présente une répartition régulière en quinconce de ses sommets de maille. Une topologie régulière permet d'obtenir une bonne répartition des triangles sur l'image. Cette topologie est la plus appropriée lorsque l'on ne connaît pas a priori le contenu de l'image à coder. Les triangles définis par ce maillage de base correspondent à des triangles de niveau 0.

Dans l'exemple de maillage de la figure 1A, les triangles de niveau 0 sont subdivisés en quatre triangles identiques de niveau 1. Cette subdivision est indiquée en trait plein fin sur la figure.

La subdivision d'un triangle père $T_1$ en quatre triangles fils de niveau supérieur $T_{11}$, $T_{12}$, $T_{13}$, $T_{14}$ est illustrée à la figure 1B.

Enfin, les triangles de niveau 1 sont subdivisés en quatre triangles de niveau 2. Cette nouvelle subdivision est représentée en traits pointillés sur la figure 1A. Ce maillage hiérarchique va permettre de représenter l'image avec une précision et donc une qualité proportionnellement croissante au nombre de maillages emboîtés. Chaque maillage emboîté correspond à un niveau de maillage du maillage hiérarchique.

Certains sommets de mailles appartiennent à plusieurs niveaux de maillage, c'est le cas par exemple du pixel supérieur gauche de l'image qui constitue un sommet de triangle pour les trois niveaux de maillage. En revanche, chaque triangle est lié à un niveau de maillage unique (à un maillage emboîté unique). Chaque sommet du maillage possède une position dans le repère de l'image et est le siège d'une information de luminance Y et de chrominance U, V.

Le maillage ainsi généré permet d'associer, dans un niveau de maillage, un triangle unique à chaque pixel de l'image. Une approximation des valeurs de luminance et de chrominance des pixels de l'image peut être obtenue par interpolation à partir des valeurs correspondantes des sommets du triangle associé.

Le modèle d'interpolation utilisé dans le présent exposé est le modèle de Lagrange. Il comprend une fonction de base affine définie de la manière suivante:

$$\begin{cases} \begin{cases} \psi_j^e(x,y) = \alpha_j^e + \beta_j^e x + \gamma_j^e y, & \alpha_j^e, \beta_j^e, \gamma_j^e \in \Re & si\ (x,y) \in e \\ \sum_{l=i,j,k} \psi_j^e(x,y) = 1 \end{cases} \\ \psi_j^e(x,y) = 0 & sinon \end{cases}$$

où e est un triangle de sommets i,j,k.

Si on désigne par p le point de coordonnées (x,y) et par $\vec{v}(p)=(v_Y,v_U,v_V)$ le vecteur regroupant les valeurs interpolées de luminance $v_Y$ et de chrominance $v_U$ et $v_V$ du point p, le vecteur $\vec{v}(p)$ est alors défini de la manière suivante:

$$\vec{v}(p) = \sum_{l=i,j,k} \psi_j^e(p).\vec{v}(l)$$

Dans le cas présent (interpolation affine), les valeurs $\psi_i^e(x,y)$, $\psi_j^e(x,y)$ et $\psi_k^e(x,y)$ représentent les coordonnées barycentriques du point p dans le triangle e. Ces coordonnées s'expriment de la manière suivante:

$$\psi_i^e(x,y) = \frac{(x_j y_k - x_k y_j) + (y_j - y_k)x + (x_k - x_j)y}{x_j y_k - x_k y_j + x_k y_i - x_i y_k + x_i y_j - x_j y_i}$$

Les $\psi_j^e(x,y)$ et $\psi_k^e(x,y)$ s'obtiennent par permutation circulaire des indices i,j,k dans les l'expression de $\psi_i^e(x,y)$.

Au terme de l'étape de maillage, on construit avantageusement une structure en arbre associé audit maillage hiérarchique pour manipuler les valeurs des sommets de mailles. L'arbre comporte un nombre de niveaux égal au nombre de niveaux de maillages (ou de maillages emboîtés). Chaque niveau de l'arbre présente un nombre de noeuds égal au nombre de triangles dans niveau de maillage correspondant. Chaque noeud de l'arbre se rapporte à un unique triangle du maillage hiérarchique. Ainsi, la partie de l'arbre se rapportant au triangle $T_1$ et à ses quatre triangles fils $T_{11}$, $T_{12}$, $T_{13}$, $T_{14}$ est illustrée à la figure 2. Si le triangle $T_1$ appartient au niveau n du maillage multiple, on crée un noeud correspondant au niveau n de l'arbre et quatre noeuds fils au niveau n+1 se rapportant chacun à un des triangles fils $T_{11}$, $T_{12}$, $T_{13}$, $T_{14}$.

Les triangles $T_1$, $T_{11}$, $T_{12}$, $T_{13}$ et $T_{14}$ ont respectivement pour sommets ABC, AEF, BEG, FGC et EFG. Le noeud se rapportant au triangle $T_1$ partage les valeurs de position, de luminance et de chrominance des sommets A, B et C avec les autres triangles ayant pour sommet l'un des points A, B ou C de manière à éviter de stocker des valeurs redondantes. De même, les valeurs des points E, F, G sont répartis dans les noeuds se rapportant aux triangles $T_{11}$, $T_{12}$, $T_{13}$, $T_{14}$.

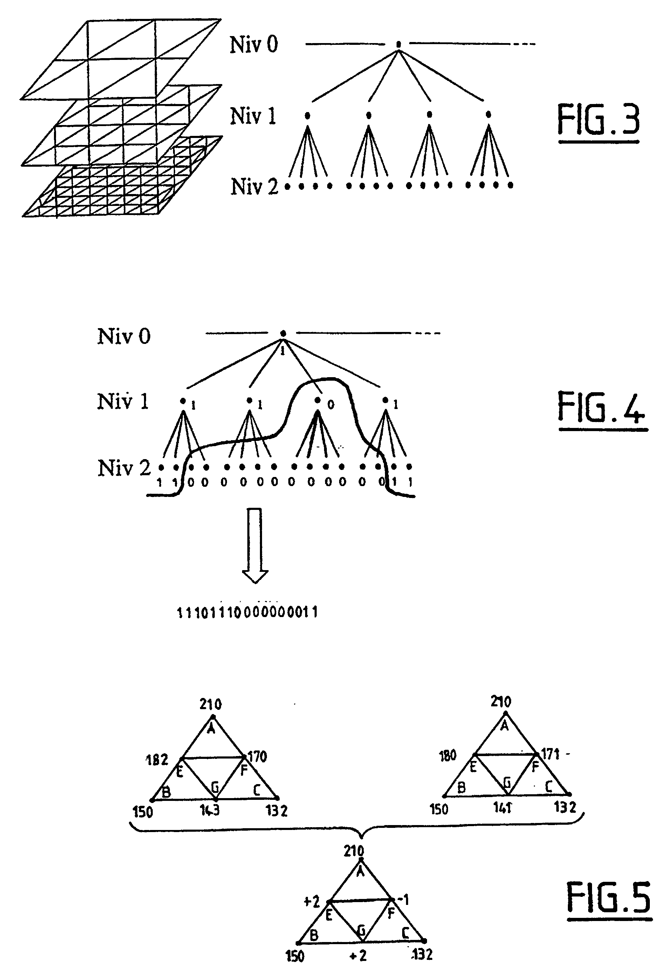

Si on crée de la même façon un noeud pour l'ensemble des triangles du maillage hiérarchique, on obtient alors un arbre tel qu'illustré à la figure 3, dont la racine comporte une pluralité de noeuds en nombre égal au nombre de triangles du maillage de base.

Une fois l'arbre construit, il s'agit de déterminer les données de l'arbre à introduire dans le train binaire représentatif de l'image. Cette détermination dépend de la qualité de représentation voulue. Pour réaliser cette détermination, on prévoit selon une étape b) de calculer pour chaque triangle du maillage hiérarchique un écart de luminance entre l'image à coder et l'image interpolée obtenue à partir des sommets du maillage emboîté auquel appartient la maille considérée.

Selon une étape c), cet écart est ensuite comparé à un écart seuil pour chaque triangle. La valeur de l'écart seuil est fonction de la qualité de représentation voulue. Puis on introduit dans le train binaire la partie de l'arbre se rapportant aux triangles dont l'écart de luminance est supérieur à un écart seuil.

En pratique, la détermination s'effectue de la manière suivante: on calcule pour chaque noeud de l'arbre l'écart de luminance du triangle associé, puis on leur adjoint une valeur, 0 ou 1, suivant que l'écart de luminance du triangle associé à ce noeud est inférieur ou supérieur à l'écart seuil. La figure 4 illustre cette étape. On introduit tout d'abord dans le train binaire une séquence permettant au décodeur de reconstruire la partie de l'arbre introduite dans le train binaire, c'est la séquence 11101110000000011 puis on introduit dans le train binaire les valeurs contenues dans les noeuds ayant un 1 dans la séquence précédente.

Avantageusement, l'écart seuil diminue au cours du procédé pour permettre une échelonnabilité du codage.

Ainsi, selon un mode réalisation préféré, l'étape de c) est réitérée plusieurs fois avec des écarts seuils de plus en plus faibles de manière à générer à chaque itération un groupe de bits supplémentaire venant améliorer la qualité de représentation. Pour construire un train binaire final sans redondances, on prévoit l'utilisation d'une table de référence dans laquelle à chaque noeud de l'arbre est associée une valeur 0 ou 1 indiquant si les valeurs du noeud en question ont déjà été introduites dans le train de bits. Les valeurs de la table sont mises à jour à mesure que les valeurs des noeuds sont introduites dans le train de bits. Ainsi, lorsque l'écart seuil diminue, on vérifie que les valeurs de noeud que l'on cherche à introduire dans le train de bits ne l'ont pas déjà été. Cela permet de n'introduire dans le train de bits que la partie de l'arbre supplémentaire correspondant à l'abaissement de l'écart seuil.

On peut ainsi décider de n'exploiter que la première partie du train binaire obtenu avec l'écart seuil le plus élevé lorsque l'on n'a pas besoin d'une qualité de représentation élevée. Pour obtenir une qualité de représentation, il faudra exploiter une plus grande partie du train binaire.

Selon un mode de réalisation amélioré, on peut prévoir de quantifier et de compresser les valeurs des sommets avant de les introduire dans le train binaire afin de limiter la taille de ce dernier. La quantification est choisie de préférence non uniforme. Elle peut par exemple s'appuyer sur la répartition statistique des valeurs de luminance (resp. de chrominance et de position). Pour ce faire, on modélise l'histogramme des valeurs de luminance (niveaux de gris) de l'image à traiter. Cet histogramme est généralement très peu étendu et peut être assimilé à une gaussienne généralisée. Après avoir calculé la moyenne et l'écart type et s'être fixé un nombre d'intervalles irréguliers, on calcule une valeur optimale de quantification $V_i$ pour chaque intervalle $I_i$. Cette valeur est obtenue par minimisation d'un critère D. Le critère D est défini de la manière suivante :

$$D = \sum_{i=1,\ldots,L} \int_{x \in I_i} (x - V_i)^2 p(x)dx$$

où

  p(x) désigne la densité de probabilité marginale du point x obtenue par la gaussienne généralisée,
  L est le nombre d'intervalles irréguliers.

Au terme de l'étape de quantification, les valeurs différentielles quantifiées sont soumises à une opération de compression de données visant à limiter la longueur du train binaire. Avantageusement, la compression est effectuée par un codeur arithmétique et adaptatif. C'est celui qui présente les meilleurs taux de compression dans le cas présent.

Le principe général du codage arithmétique (ou de la compression arithmétique) est le suivant: chaque message formé de symboles est représenté par un intervalle de réels compris entre 0 et 1. Plus la probabilité d'apparition d'un symbole est élevée, plus son intervalle de représentation sera grand. Le codage arithmétique est expliqué plus en détail dans l'ouvrage intitulé « Compression de données » de Pascal Plumé, Ed. Eyrolles, pp 111-168.

Par ailleurs, le codage adaptatif consiste à adapter le codage d'un symbole en fonction de sa fréquence d'apparition, et cela, au fur et à mesure de l'étape de compression. Ainsi, si un symbole est codé sur 5 bits en début de compression, à un autre stade de la compression ce même symbole peut être codé sur 1 ou 9 bits suivant que sa fréquence d'apparition augmente ou diminue. A tout moment de la compression, le symbole le plus fréquent est codé sur le nombre de bits le plus faible. Bien entendu, cette technique nécessite que la partie du codeur chargée de la compression et celle du décodeur chargée de la décompression fonctionnent en parallèle et de façon homogène. Dans ce type de codage, le codeur et le décodeur commencent avec une même table statistique dans laquelle tous les symboles sont équiprobables. Au fur et à mesure de la compression, le codeur met à jour la table. Le décodeur en fait de même avec sa table lors de la décompression. Tant que l'algorithme de mise à jour est identique dans le codeur et le décodeur, ce type de codage fonctionne parfaitement sans avoir à transmettre de table statistique.

Les distributions statistiques des valeurs de luminance, de chrominance et de position étant différentes les unes des autres, il est préférable de coder séparément ces valeurs. Aussi, le codeur arithmétique adaptatif est prévu pour traiter séparément ces trois types de valeur.

Afin de réduire la taille du train binaire, on prévoit selon un perfectionnement de ne pas introduire dans le train binaire les valeurs exactes de luminance, de chrominance et de position des sommets de mailles des maillages emboîtés mais des valeurs différentielles, hormis pour le maillage de base. Chaque valeur différentielle représente la différence entre la valeur exacte associée de l'image à coder et une valeur interpolée obtenue à partir des valeurs exactes correspondantes des sommets voisins du maillage emboîté de niveau hiérarchique inférieur.

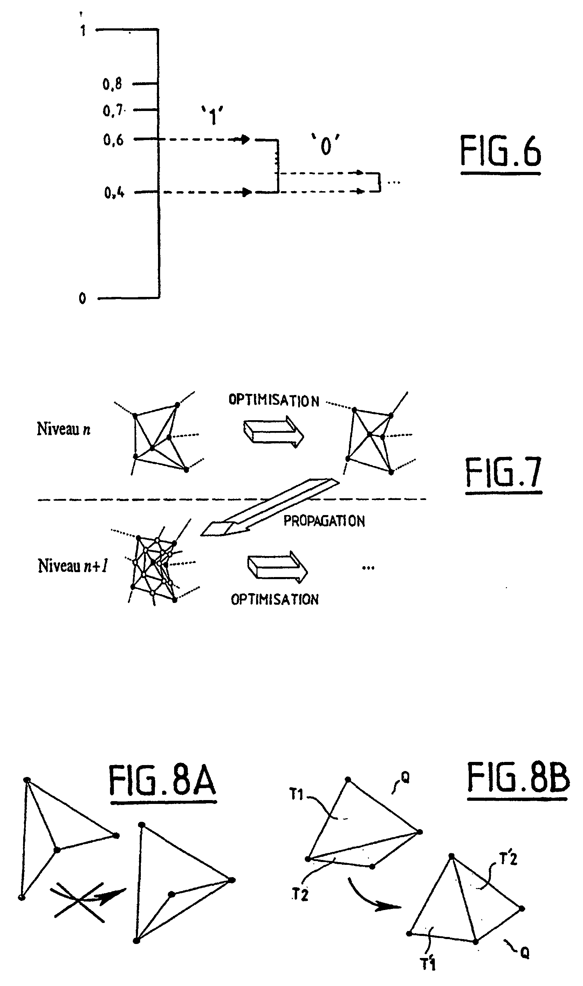

Un exemple de détermination de valeurs différentielles est illustré à la figure 5. On considère un triangle de niveau 0 dont les sommets A, B, C ont respectivement pour valeur de luminance 210, 150 et 132. Ce triangle est subdivisé en quatre triangles identiques de niveau 1, faisant apparaître ainsi trois nouveaux sommets E, F et G localisés respectivement au milieu des cotés AB, AC et BC du triangle de niveau 0. Les valeurs de luminance des sommets E, F et G dans l'image à coder sont respectivement 182, 170 et 143. Si on calcule les valeurs de luminance des sommets E, F, G par interpolation des valeurs des sommets adjacents, on obtient alors les valeurs 180, 171 et 141. Les valeurs introduites dans le train binaire sont alors +2, -1 et +2 correspondant à la différence entre les valeurs exactes et les valeurs interpolées. Ces valeurs sont cependant préalablement quantifiées pour limiter le nombre de valeurs possibles et améliorer ainsi les performances de l'opération de compression de données à suivre.

Par ailleurs, pour ne pas cumuler les erreurs de quantification, le calcul des valeurs différentielles est réalisé à partir des valeurs quantifiées du niveau inférieur.

Selon une forme de réalisation préférée, on prévoit également d'adapter le maillage (position et valeurs Y,U, V des sommets) au contenu de l'image afin d'en exploiter au mieux le potentiel de codage. Cette adaptation peut se faire à trois niveaux:

- optimisation de la position des sommets du maillage : la position des noeuds est modifiée en fonction de leur efficacité à représenter localement l'image;
- optimisation des valeurs de luminance et de chrominance des sommets du maillage: les valeurs Y,U,V sont optimisées pour représenter au mieux l'image originale;
- optimisation de la topologie du maillage : la topologie du maillage est modifiée au moyen d'une opération d'inversion de diagonale de manière à encore améliorer la capacité du maillage à représenter localement l'image.

La structure de maillage choisie précédemment est par construction régulière. Elle peut donc parfois sembler inadaptée pour représenter une image comportant des disparités au niveau de son contenu et mêlant notamment des régions uniformes à des zones plus texturées nécessitant une plus forte densité de sommets. Une optimisation de la position des sommets du maillage va permettre de déplacer les concentrations de sommets du maillage vers les zones le nécessitant.

L'effet visuel le plus immédiat d'une telle optimisation se manifeste par un rapprochement des sommets du maillage vers les contours physiques des objets de l'image.

Cette opération est effectuée niveau par niveau, en commençant par le niveau correspondant au maillage de base (niveau 0). Le résultat de l'optimisation au niveau n est ensuite transmis au niveau n+1, et la position des sommets supplémentaires du niveau n+1 est obtenue à partir de la nouvelle position des sommets de niveau n. Cette optimisation de la position à chaque niveau et sa propagation aux différents niveaux de l'arbre sont illustrées à la figure 7.

L'optimisation de position est effectuée par minimisation d'un critère E correspondant à l'écart de luminance entre l'image à coder et l'image interpolée. Pour le calcul de E, on considère des points q de $\Re^3$ de coordonnées x, y et z avec z=Y (composante de luminance). Le critère E est défini de la manière suivante

$$E = \int_{\Re^3} F(q)dq$$

où F est une fonction indicatrice valant 1 si q est compris entre la surface formée des points q de l'image originale et la surface formée des points q de l'image interpolée, et 0 sinon.

La minimisation de l'écart E est effectuée au moyen d'un algorithme de descente de gradient à pas adaptatif. Il s'agit en fait de trouver le vecteur X des points de $\Re^3$ où E est minimal c'est-à-dire :

$$\nabla E(X) = 0$$

Cela revient à résoudre le système d'équations non linéaires suivant:

$$\begin{cases} \dfrac{\partial E}{\partial x}(X) = 0 \\ \dfrac{\partial E}{\partial y}(X) = 0 \\ \dfrac{\partial E}{\partial z}(X) = 0 \end{cases}$$

On peut résoudre ce système directement par la méthode de Newton, cependant il arrive que cette méthode ne converge pas lorsque le point de départ des itérations est trop éloigné de la solution. Aussi, est-il préférable d'utiliser des procédures itératives conduisant à produire une suite de positions intermédiaires $q_1$, $q_2$... convergeant vers un optimum local de E.

Ce type de procédure itérative se déroule de la manière suivante: pour la détermination de la position optimale du sommet $S_0$, on part de sa position de départ $q_{S_0}$, et on calcule le gradient de E en ce point. Comme $\nabla E(q_{S_0})$ indique la direction de la plus grande augmentation de E, on déplace le sommet d'une quantité $\alpha_0$ dans la direction opposée, et le sommet $S_0$ a pour nouvelle position

$$q_1 = q_{S_0} - \alpha_0 \ ^* \ \frac{\nabla E(q_{S_0})}{\left|\nabla E(q_{S_0})\right|}$$

La procédure ainsi répétée engendre les positions intermédiaires $q_2$, $q_3$,....$q_k$ telles que

$$q_{k+1} = q_k - \alpha_k \ ^* \ \frac{\nabla E(q_k)}{\left|\nabla E(q_k)\right|}$$

On choisit avantageusement un pas $\alpha_k$ adaptatif de manière à accélérer la convergence. La méthode de descente de gradient à pas adaptatif consiste à diminuer (resp. augmenter) le pas $\alpha_k$ lorsque l'écart E augmente (resp. diminue) tout en respectant une contrainte de taille sur le pas visant à ce que $\alpha_k \in [\alpha_{min}, \alpha_{max}]$ La position finale $q_n = q_{S_0}$ est obtenue lorsque la différence entre deux écarts E successifs est inférieur à un écart seuil minimal. On calcule de façon analogue la position optimale des autres sommets du maillage.

Comme on l'a vu précédemment, l'écart E est calculée par rapport à l'image réelle. Selon une version améliorée, l'écart E est calculé à chaque niveau de maillage par rapport à une image de référence I spécifique présentant des similarités en terme de contenu fréquentiel avec le niveau de maillage considéré. Ainsi, le maillage de base (niveau 0) ne représentant que l'aspect basse fréquence d'une image, l'image de référence utilisée pour l'optimisation de position des sommets de ce niveau de maillage possède également un contenu fréquentiel basse fréquence. Cette image de référence est obtenue par filtrage de l'image réelle.

De façon analogue, on associe à chaque niveau de maillage une image de référence dont le contenu fréquentiel est adapté au maillage considéré. L'image de référence associé au niveau de maillage le plus élevé correspond à l'image réelle (sans filtrage). Pour générer ces images de référence, on utilise une approximation des filtres passe-bas demi-bande de réponse impulsionnelle infinie

$$h(n) = \frac{\sin(\pi n/L)}{\pi n/L},$$

où L étant un facteur de sous-échantillonnage.

On utilise ainsi une image de référence différente à chaque niveau de maillage pour calculer la valeur E.

L'optimisation des valeurs de luminance et de chrominance associées aux sommets de maillage constitue un autre perfectionnement possible du procédé de l'invention.

L'optimisation des valeurs Y,U,V est réalisée via une méthode des moindres carrés, et consiste à minimiser un critère E' défini sur le domaine de l'image $\Omega$ de la manière suivante:

$$E' = \int_{\Omega} \left| I(x,y) - \sum_{n=1}^{M} \psi_{S_n}(x,y).v(S_n) \right|^2 dxdy$$

où

- $S_n$ est un sommet d'indice n du maillage multiple,
- M est le nombre total de sommets du maillage multiple,
- $I(x,y)$ représente la valeur de luminance (resp. la valeur de chrominance U ou V) du pixel de coordonnées $(x,y)$ de l'image à coder,
- $\psi_{S_n}$ est la fonction d'interpolation associée au sommet $S_n$,
- $v(S_n)$ est la valeur optimisée de luminance (resp. de chrominance) associée au sommet $S_n$.

Si on dérive cette expression, on obtient les valeurs optimisées en résolvant le système linéaire de M équations suivant :

$$\begin{cases} \displaystyle\sum_{n=1}^{M}\left(\int_{\Omega}\psi_{S_{l}}(x,y)\cdot\psi_{S_{n}}(x,y)\cdot dxdy\right)\cdot v(S_{1}) = \int_{\Omega}I(x,y)\cdot\psi_{S_{l}}(x,y)\cdot dxdy \\ \qquad\qquad\vdots \\ \displaystyle\sum_{n=1}^{M}\left(\int_{\Omega}\psi_{S_{m}}(x,y)\cdot\psi_{S_{n}}(x,y)\cdot dxdy\right)\cdot v(S_{m}) = \int_{\Omega}I(x,y)\cdot\psi_{S_{m}}(x,y)\cdot dxdy \\ \qquad\qquad\vdots \end{cases}$$

Grâce au support compact des fonctions $\psi_{S_m}$, ce système d'équations peut également s'exprimer de la manière suivante:

$$\begin{cases} \displaystyle\sum_{e\in sup\,p(S_{l})}\sum_{(x,y)\in e}\sum_{S_{k}\in ver(e)}\psi_{S_{l}}(x,y)\cdot\psi_{S_{k}}(x,y)\cdot v(S_{1}) = \sum_{e\in sup\,p(S_{l})}\sum_{(x,y)\in e}I(x,y)\cdot\psi_{S_{l}}(x,y) \\ \qquad\qquad\vdots \\ \displaystyle\sum_{e\in sup\,p(S_{m})}\sum_{(x,y)\in e}\sum_{S_{k}\in ver(e)}\psi_{S_{m}}(x,y)\cdot\psi_{S_{k}}(x,y)\cdot v(S_{m}) = \sum_{e\in sup\,p(S_{m})}\sum_{(x,y)\in e}I(x,y)\cdot\psi_{S_{m}}(x,y) \\ \qquad\qquad\vdots \end{cases} \qquad (1)$$

où

- supp($S_m$) désigne les triangles ou mailles ayant pour sommet le sommet $S_m$, et
- ver(e) désigne les sommets du triangle e.

Résoudre le système d'équations précédent équivaut à résoudre un système matriciel du type:

$$AX=B$$

où

- A est une matrice symétrique définie positive,
- X est la matrice colonne des valeurs optimisées $v(S_m)$ avec $m \in [1..M]$, et
- B est une matrice colonne des valeurs du terme de droite du système (1).

La matrice A étant une matrice symétrique définie positive, elle possède une factorisation $A=LDL^T$ unique, L désignant une matrice triangulaire inférieure à diagonale unité et D une matrice diagonale dont tous les coefficients diagonaux sont strictement positifs. Le conditionnement de la matrice A avoisine par ailleurs la valeur unité.
La détermination des coefficients de L et D peut se faire par identification des coefficients situés dans la partie triangulaire inférieure des matrices:

$$A_{i,j} = \sum_{k=1..M} L_{i,k}\,{}^{*}D_{k}\,{}^{*}L_{j,k} = \sum_{k=1..j}L_{i,k}\,{}^{*}D_{k}\,{}^{*}L_{j,k} \quad \text{pour } j \leq i$$

Par ailleurs, on a:

$$L_{i,j} = (A_{i,j} - (\sum_{k=1..j-1} L_{i,k} * D_k * L_{j,k})/D_j) \text{ pour } 1 \le j \le i$$

$$D_i = A_{i,j} - \sum_{k=1..i-1} L_{i,k}^2 * D_k$$

Les termes de la matrice X des valeurs optimisées sont alors déterminées par la formule:

$$X_i = B_i - \sum_{j=1..i-1} X_j * L_{i,j}$$

Selon un mode de réalisation améliorée, on pourra prévoir d'utiliser la technique profil pour résoudre le système AX=B de manière à limiter la taille mémoire lors de la factorisation de A. La technique profil remplace la représentation classique d'une matrice sous forme d'un tableau M X M par une représentation sous la forme de deux vecteurs. En effet, la matrice A étant creuse (elle comporte beaucoup de zéros), sa représentation sous forme classique n'est pas adéquate.

Selon un dernier perfectionnement, on peut également prévoir d'améliorer la topologie du maillage. Il arrive en effet que la structure locale du maillage ne soit pas adaptée aux particularités de l'image. Bien qu'il serait possible d'affiner le maillage jusqu'à obtenir un maillage hiérarchique adapté, il se révèle parfois plus simple d'effectuer une opération d'inversion de diagonale.

Cette opération d'inversion de diagonale est effectuée sur le dernier niveau de maillage et consiste à inverser la diagonale dans les quadrilatères convexes formés de deux triangles adjacents dudit niveau de maillage si le maillage ainsi modifié offre une meilleure qualité de reconstruction de l'image.

Cette opération d'inversion de diagonale ne concerne que les quadrilatères convexes. La figure 8A illustre un exemple de quadrilatère non convexe pour lequel l'opération d'inversion de diagonale n'est pas autorisée.

Une opération d'inversion de diagonale sur un quadrilatère convexe Q formé de deux triangles T1 et T2 est illustrée figure 8B. Cette opération consiste à inverser la diagonale représentant l'arête commune aux deux triangles T1 et T2. Le quadrilatère Q comprend alors après inversion deux nouveaux triangles T'1 et T'2.

L'opération d'optimisation de la topologie comporte alors les étapes suivantes:

- on calcule l'écart de luminance E sur chaque quadrilatère convexe Q formé de deux triangles adjacents T1, T2 du niveau de maillage le plus élevé, cet écart de luminance étant égal à la somme des sommes des écarts de luminance de T1 et T2, E(Q)= E(T1)+E(T2),
- on inverse la diagonale représentant l'arête commune aux deux triangles T1 et T2 de manière à former deux nouveaux triangles T'1 et T'2,,
- on calcule l'écart de luminance des nouveaux triangles T'1 et T'2 et on les additionne E(Q)=E(T'1)+E(T'2), et
- on conserve dans le maillage les deux triangles dont la somme des écarts de luminance est la plus faible.

## Revendications

1. Procédé de codage d'une image numérique visant à produire un train binaire représentatif de ladite image, la longueur du train binaire étant fonction de la qualité de représentation voulue, **caractérisé en ce qu'**il comporte les étapes suivantes:

   a) définir, sur le domaine de l'image à coder, un maillage hiérarchique comportant une pluralité de maillages emboîtés dont les sommets de mailles sont des pixels de ladite image;
   b) déterminer, pour chaque maille dudit maillage hiérarchique, un écart de luminance entre l'image à coder et une image interpolée obtenue à partir des sommets du maillage emboîté auquel appartient la maille considérée, et
   c) introduire dans le train binaire les valeurs de position, de luminance et de chrominance des sommets des mailles dont l'écart de luminance est supérieur à un écart seuil.

**2.** Procédé de codage selon la revendication 1, **caractérisé en ce que** ledit maillage hiérarchique est obtenu par subdivisions régulières et successives des mailles d'un maillage de base grossier.

**3.** Procédé de codage selon la revendication 2, **caractérisé en ce que** le maillage de base présente une répartition régulière en quinconce de ses sommets de maille.

**4.** Procédé de codage selon l'une des revendications 1 à 3, **caractérisé en ce qu'**il comporte en outre une étape de réalisation d'une structure en arbre associé audit maillage hiérarchique.

**5.** Procédé de codage selon l'une des revendications 1 à 4, **caractérisé en ce que** l'étape c) est réitérée plusieurs fois avec des écarts seuils de plus en plus faibles de manière à générer à chaque itération un groupe de bits venant améliorer la qualité de représentation.

**6.** Procédé de codage selon l'une des revendications 1 à 5, **caractérisé en ce que** les valeurs de position, de luminance et de chrominance des sommets de mailles à introduire dans le train binaire sont soumises à une opération préalable de quantification.

**7.** Procédé de codage selon la revendication 6, **caractérisé en ce que** ladite opération de quantification est non uniforme.

**8.** Procédé de codage selon la revendication 6 ou 7, **caractérisé en ce que** les valeurs quantifiées sont soumises à une opération de compression de données avant d'être introduite dans le train binaire.

**9.** Procédé de codage selon la revendication 8, **caractérisé en ce que** ladite opération de compression de données est effectuée par un codeur arithmétique adaptatif.

**10.** Procédé de codage selon l'une des revendications 2 à 5, **caractérisé en ce que** les valeurs de luminance, de chrominance et de position des sommets de mailles des maillages emboîtés, hormis les valeurs se rapportant au maillage de base, et qui sont introduites dans le train binaire, sont des valeurs différentielles représentant chacune la différence entre la valeur exacte correspondante de l'image à coder et une valeur interpolée obtenue à partir des valeurs exactes correspondantes des sommets voisins du maillage emboîté de niveau hiérarchique inférieur.

**11.** Procédé de codage selon l'une des revendications précédentes **caractérisé en ce que**, préalablement à l'étape b), pour chaque maillage emboîté dudit maillage hiérarchique, on optimise la position de ses sommets de mailles en minimisant l'écart de luminance entre l'image à coder et l'image interpolée obtenue à partir de ses sommets de mailles.

**12.** Procédé de codage selon l'une des revendications 1 à 11 **caractérisé en ce que**, préalablement à l'étape b), on associe à chaque maillage dudit maillage hiérarchique une image de référence et on optimise pour chaque maillage emboîté la position de ses sommets de mailles en minimisant l'écart de luminance entre l'image de référence qui lui est associée et l'image interpolée à partir de ses sommets de mailles.

**13.** Procédé de codage selon la revendication 12, **caractérisé en ce que** les images de référence associés aux différents maillages du maillage hiérarchique sont obtenues par filtrage de l'image à coder.

**14.** Procédé de codage selon l'une des revendications 11 à 13, **caractérisé en ce que** la minimisation de l'écart de luminance est effectuée par un algorithme de descente de gradient à pas adaptatif.

**15.** Procédé de codage selon l'une des revendication précédentes **caractérisé en ce que**, préalablement à l'étape b), on optimise les valeurs de luminance et de chrominance des sommets des mailles des maillages emboîtés en minimisant le critère E' suivant

$$E' = \int_{\Omega} \left| I(x,y) - \sum_{n=1}^{M} \psi_{S_n}(x,y).v(S_n) \right|^2 dxdy$$

où

- $S_n$ est un sommet d'indice n dudit maillage hiérarchique,
- M est le nombre total de sommets dudit maillage hiérarchique,
- I(x,y) représente la valeur de luminance (resp. la valeur de chrominance U ou V) du pixel de coordonnées (x, y) de l'image à coder,
- $\psi_{S_n}$ est une fonction d'interpolation associée au sommet $S_n$, et
- $v(S_n)$ est la valeur optimisée de luminance (resp. de chrominance) associée au sommet $S_n$.

**16.** Procédé de codage selon la revendication 15 **caractérisé en ce que** la minimisation du critère E' est effectuée en résolvant le système linéaire de M équations suivant:

$$\begin{cases} \sum_{e \in sup\, p(S_1)} \sum_{(x,y) \in e} \sum_{S_k \in ver(e)} \psi_{S_1}(x,y).\psi_{S_k}(x,y).v(S_1) = \sum_{e \in sup\, p(S_1)} \sum_{(x,y) \in e} I(x,y).\psi_{S_1}(x,y) \\ \vdots \\ \sum_{e \in sup\, p(S_m)} \sum_{(x,y) \in e} \sum_{S_k \in ver(e)} \psi_{S_m}(x,y).\psi_{S_k}(x,y).v(S_m) = \sum_{e \in sup\, p(S_m)} \sum_{(x,y) \in e} I(x,y).\psi_{S_m}(x,y) \\ \vdots \end{cases} \quad (1)$$

où

- supp($S_m$) désigne les mailles ayant pour sommet le sommet $S_m$, et
- ver(e) désigne les sommets de la maille e.

**17.** Procédé de codage selon la revendication 12 **caractérisé en ce que** ledit système linéaire à M équations est résolu par une méthode de décomposition LDL$^t$ profil visant à présenter ledit système linéaire sous la forme de deux vecteurs de M composantes.

**18.** Procédé de codage selon l'une des revendications précédentes **caractérisé en ce que** le maillage hiérarchique est un maillage triangulaire, et **en ce que**, préalablement à l'étape b), on effectue les étapes suivantes:

- calculer, pour chaque quadrilatère convexe formé de deux triangles adjacents appartenant au maillage de niveau hiérarchique le plus élevé, la somme des écarts de luminance associés aux deux triangles,
- inverser la diagonale du quadrilatère représentant l'arête commune aux deux triangles, de manière à définir deux nouveaux triangles,
- calculer l'écart de luminance de chacun des deux nouveaux triangles, et les additionner, et
- conserver dans ledit maillage les deux triangles dont la somme des écarts de luminance est la plus faible.

**19.** Structure de train binaire représentatif d'au moins une image numérique codé selon le procédé de codage selon l'une des revendications 1 à 18.

**20.** Procédé de décodage d'une image numérique **caractérisé en ce qu'**il comporte une étape de décompression des données du train binaire généré par le procédé de codage selon la revendication 9.

**Claims**

**1.** Method for coding a digital image intended to produce a binary string representing the said image, the length of the binary string being a function of the required quality of representation, **characterised by** the fact that it includes the following steps:

a) defining, in the domain of the image to be coded, a hierarchical matrix including a plurality of nested matrices the mesh vertices of which are pixels of the said image;
b) determining, for each mesh of the said hierarchical matrix, a luminance difference between the image to be coded and an interpolated image obtained from the vertices of the nested matrix to which the mesh in question belongs, and

c) introducing into the binary string the position, luminance and chrominance values of the vertices of the meshes having a luminance difference greater than a threshold difference.

2. A coding method as described in claim 1, **characterised by** the fact that the said hierarchical matrix is obtained by regular and successive subdivisions of the meshes of a coarse base matrix.

3. A coding method as described in claim 2, **characterised by** the fact that the base matrix has a regular distribution of the mesh vertices in staggered rows.

4. A coding method as described in one of claims 1 to 3, **characterised by** the fact that it also includes a step of creating a tree structure associated with the said hierarchical matrix.

5. A coding process as described in one of claims 1 to 4, **characterised by** the fact that step c) is reiterated a plurality of times with increasingly small difference thresholds so as to generate, at each iteration, a group of bits improving the representation quality.

6. A coding method as described in one of claims 1 to 5, **characterised by** the fact that the position, luminance and chrominance values of the mesh vertices to be introduced into the binary string are subjected to a prior quantification operation.

7. A coding method as described in claim 6, **characterised by** the fact that the said quantification operation is non-uniform.

8. A coding method as described in claim 6 or 7, **characterised by** the fact that the quantified values are subjected to a data compression operation before being introduced into the binary string.

9. A coding method as described in claim 8, **characterised by** the fact that the said data compression operation is performed by an adaptive arithmetic coder.

10. A coding method as described in one of claims 2 to 5, **characterised by** the fact that the luminance, chrominance and position values of the mesh vertices of the nested matrices, apart from the values relating to the base matrix, and which are introduced into the binary string, are differential values each representing the difference between the corresponding exact value of the image to be coded and an interpolated value obtained from the corresponding exact values of the neighbouring vertices of the nested matrix of lower hierarchical level.

11. A coding method as described in one of the preceding claims, **characterised by** the fact that, prior to step b), for each nested matrix of the said hierarchical matrix, the positions of its mesh vertices are optimised by minimising the luminance difference between the image to be coded and the interpolated image obtained from its mesh vertices.

12. A coding method as described in one of claims 1 to 11, **characterised by** the fact that, prior to step b), a reference image is associated with each matrix of the hierarchical matrix and for each nested matrix, the positions of its mesh vertices are optimised by minimising the luminance difference between the reference image which is associated with it and the interpolated image from its mesh vertices.

13. A coding method as described in claim 12, **characterised by** the fact that the reference images associated with the different matrices of the hierarchical matrix are obtained by filtering the image to be coded.

14. A coding method as described in one of claims 11 to 13, **characterised by** the fact that the luminance difference minimisation is performed by an adaptive step gradient descent algorithm.

15. A coding method as described in one of the preceding claims, **characterised by** the fact that, prior to step b), the luminance and chrominance values of the vertices of the meshes of the nested matrices are optimised by minimising the following criterion E'

$$E' = \int_{\Omega} \left| I(x,y) - \sum_{n=1}^{M} \Psi_{S_n}(x,y).v(S_n) \right|^2 dxdy$$

in which

- $S_n$ is a vertex of index n of the said hierarchical matrix,
- M is the total number of vertices of the said hierarchical matrix.
- I(x,y) represents the luminance value (U or V chrominance value resp.) of the pixel of coordinates (x,y) of the image to be coded,
- $\Psi_{S_n}$ is an interpolation function associated with the vertex $S_n$, and
- $v(S_n)$ is the optimised luminance (chrominance resp.) value associated with the vertex $S_n$.

16. Coding process as described in claim 15, **characterised by** the fact that the minimisation of the criterion E' is effected by resolving the following linear system of M equations:

$$\begin{cases} \sum_{e \in supp(S1)} \sum_{(x,y) \in eS_k} \sum_{\in ver(e)} \Psi_{S_1}(x,y).\Psi_{S_k}(x,y).v(S_1) = \sum_{e \in supp(S_1)} \sum_{(x,y) \in e} I(x,y).\Psi_{S_1}(x,y) \textbf{ (1)} \\ \sum_{e \in supp(S_m)} \sum_{(x,y) \in eS_k} \sum_{\in ver(e)} \Psi_{S_m}(x,y).\Psi_{S_k}(x,y).v(S_m) = \sum_{e \in supp(S_m)} \sum_{(x,y) \in e} I(x,y).\Psi_{S_m}(x,y) \end{cases}$$

in which

- $supp(S_m)$ designates the meshes having as vertex the vertex $S_m$, and
- ver(e) designates the vertices of the mesh e.

17. Coding process as described in claim 12, **characterised by** the fact that the said linear system with M equations is resolved by a method of profile LDL$^t$ decomposition intended to present the said linear system in the form of two vectors of M components.

18. Coding process as described in one of the preceding claims, **characterised by** the fact that the hierarchical matrix is a triangular matrix, and by the fact that, prior to step b), the following steps are performed:

- calculating, for each convex quadrilateral formed of two adjacent triangles belonging to the matrix of highest hierarchical level, the sum of the luminance differences associated with the two triangles,
- inverting the diagonal of the quadrilateral representing the side common to the two triangles, so as to define two new triangles,
- calculating the luminance difference of each of the two new triangles, and adding them, and
- preserving in the said matrix the two triangles having the smallest luminance difference sum.

19. Binary string structure representing at least one digital image coded in accordance with the coding process as described in one of claims 1 to 18.

20. Process for decoding a digital image, **characterised by** the fact that it includes a step of decompression of the data of the binary string generated by the coding process as described in claim 9.

**Patentansprüche**

1. Verfahren zur Kodierung eines digitalen Bildes für die Erzeugung einer'binären Abfolge, die das Bild darstellt, wobei die Länge der binären Abfolge von der Qualität der gewollten Darstellung abhängt, **gekennzeichnet durch** die folgenden Schritte:

EP 1 116 185 B1

a) Definieren eines hierarchischen Gitternetzes in dem Bereich des zu kodierenden Bildes, das mehrere ineinandergefügte Gitternetze aufweist, wobei die Spitzen der Zellen Pixel des Bildes sind,

b) Bestimmen eines Abstandes der Leuchtdichte für jede Zelle des hierarchischen Gitternetzes zwischen dem zu kodierenden Bild und einem interpolierten Bild, das **durch** die Spitzen des ineinandergefügten Gitternetzes erhalten wurde, zu der die betrachtete Zelle gehört, und

c) Einfügen von Positions-, Leuchtdichte- und Farbtonwerte der Spitzen der Zellen in die binäre Abfolge, wobei der Leuchtdichte-Abstand größer als ein Schwellenabstand ist.

**2.** Codierungsverfahren nach Anspruch 1, **dadurch gekennzeichnet, daß** das hierarchische Gitternetz durch die regelmäßige und aufeinanderfolgende Unterteilung der Zellen eines groben Gitternetzes entstanden ist.

**3.** Codierungsverfahren nach Anspruch 2, **dadurch gekennzeichnet, daß** das Basisgitternetz eine regelmäßig versetzte Verteilung der Spitzen der Zellen aufweist.

**4.** Codierungsverfahren nach einem der Ansprüche 1 bis 3, **dadurch gekennzeichnet, daß** es weiterhin einen Schritt zur Erzeugung einer Baumstruktur aufweist, die mit dem hierarchischen Gitternetz verbunden ist.

**5.** Codierungsverfahren nach einem der Ansprüche 1 bis 4, **dadurch gekennzeichnet, daß** der Schritt c) mehrfach mit immer kleineren Schwellabständen wiederholt wird, so daß bei jeder Iteration eine Gruppe von Bits erzeugt wird, die die Darstellungsqualität verbessert.

**6.** Codierungsverfahren nach einem der Ansprüche 1 bis 5, **dadurch gekennzeichnet, daß** die Positions-, Leuchtdichte- und Farbtonwerte der Spitzen der Zellen, die in die binäre Abfolge eingefügt werden, vorher quantifiziert werden.

**7.** Codierungsverfahren nach Anspruch 6, **dadurch gekennzeichnet, daß** das Quantifizierungsverfahren nicht gleichmäßig ist.

**8.** Codierungsverfahren nach Anspruch 6 oder 7, **dadurch gekennzeichnet, daß** die quantifizierten Werte einer Datenkompressions-Operation unterzogen werden, bevor sie in die binäre Abfolge eingefügt werden.

**9.** Codierungsverfahren nach Anspruch 8, **dadurch gekennzeichnet, daß** die Datenkomprimierungsoperation durch einen sich anpassenden arithmetischen Codierer durchgeführt wird.

**10.** Codierungsverfahren nach einem der Ansprüche 2 bis 5, **dadurch gekennzeichnet, daß** die Leuchtdichte-, Farbton- und Positionswerte der Spitzen der Zellen der ineinandergefügten Gitternetze mit Ausnahme der Werte, die sich auf das Basisgitternetz beziehen und die in die binäre Abfolge eingefügt wurden, Differenzwerte sind, die jeweils der Differenz zwischen dem exakten Wert, der dem zu kodierenden Bild entspricht, und dem interpolierten Wert entsprechen, der, ausgehend von den entsprechenden exakten Werten der benachbarten Spitzen des ineinandergeschachtelten Gitternetzes des unteren Hierarchieniveaus, erhalten wurde.

**11.** Codierungsverfahren nach einem der vorhergehenden Ansprüche, **dadurch gekennzeichnet, daß** vor dem Schritt b) für jedes ineinandergefügte Gitternetz des hierarchischen Gitternetzes die Position der Spitzen der Zellen optimiert wird, indem der Abstand der Leuchtdichte zwischen dem zu kodierenden Bild und dem interpolierten Bild minimiert wird, das von den Spitzen der Zellen erhalten wurde.

**12.** Codierungsverfahren nach einem der Ansprüche 1 bis 11, **dadurch gekennzeichnet, daß** vor dem Schritt b mit jedem Gitternetz des hierarchischen Gitternetzes ein Referenzbild verbunden wird, und daß für jedes ineinandergefügte Gitternetz die Position der Spitzen der Zellen optimiert wird, indem der Leuchtdichte-Abstand zwischen dem damit verbundenen Referenzbild und dem interpolierten Bild, ausgehend von den Spitzen der Zellen, minimiert wird.

**13.** Codierungsverfahren nach Anspruch 12, **dadurch gekennzeichnet, daß** die mit den verschiedenen Gitternetzen des hierarchischen Gitternetzes verbundenen Referenzbilder durch Filterung des zu kodierenden Bildes erhalten werden.

**14.** Codierungsverfahren nach einem der Ansprüche 11 bis 13, **dadurch gekennzeichnet, daß** die Minimierung des Leuchtdichteabstandes durch einen Algorhythmus mit absteigenden Gradienten mit adaptiver Schrittweite erfolgt.

**15.** Codierungsverfahren nach einem der vorstehenden Ansprüche, **dadurch gekennzeichnet, daß** vor dem Schritt b) die Leuchtdichte- und Farbtonwerte der Spitzen der Zellen der ineinandergefügten Gitternetze optimiert werden, indem das Kriterium E' minimiert wird:

$$E' = \int_{\Omega} \left| I(x,y) - \sum_{n=1}^{M} \psi_{S_n}(x,y) . v(S_n) \right|^2 dxdy$$

- wobei $S_n$ = die Spitze des Index' n des hierarchischen Gitternetzes darstellt,
- M die Gesamtanzahl der Spitzen des hierarchischen Gitternetzes, I (x, y) den Leuchtdichte-Wert (bzw. den Farbtonwert U oder V) des Pixels mit den Koordinaten (x, y) des zu kodierenden Bildes darstellt,
- $\psi S_n$ eine mit der Spitze Sn verbundene Interpolationsfunktion ist, und
- $v(S_n)$ der optimierte Wert der Leuchtdichte (bzw. des Farbtons)ist, der mit der Spitze Sn verbunden ist.

**16.** Codierungsverfahren nach Anspruch 15, **dadurch gekennzeichnet, daß** die Minimierung des Kriteriums E' dadurch erfolgt, indem das lineare System der M folgenden Gleichungen gelöst wird:

$$\begin{cases} \sum_{e \in \text{sup } p(S_1)} \sum_{(x,y) \in e} \sum_{S_t \text{ } e \vee er(e)} \psi_{S_1}(x,y) . \psi_{S_t}(x,y) . v(S_1) = \sum_{e \in \text{sup } p(S_1)} \sum_{(x,y) \in e} I(x,y) . \psi_{S_1}(x,y) \\ \\ \sum_{e \in \text{sup } p(S_m)} \sum_{(x,y) \in e} \sum_{S_t \text{ } e \vee er(e)} \psi_{S_m}(x,y) . \psi_{S_t}(x,y) . v(S_m) = \sum_{e \in \text{sup } p(S_m)} \sum_{(x,y) \in e} I(x,y) . \psi_{S_m}(x,y) \end{cases} \quad (1)$$

- wobei supp $(S_m)$ die Zellen darstellt, deren Spitze $S_m$ ist und
- ver (e) die Spitzen der Zelle e darstellt.

**17.** Codierungsverfahren nach Anspruch 12, **dadurch gekennzeichnet, daß** das lineare System mit M-Gleichungen durch ein Auflösungsverfahren LDL$^t$ Profil gelöst wird, das das lineare System in der Form von 2 Vektoren mit M-Komponenten darstellt.

**18.** Codierungsverfahren nach einem der vorstehenden Ansprüche, **dadurch gekennzeichnet, daß** das hierarchische Gitternetz ein Dreiecksgitternetz ist, und daß vor dem Schritt b) folgende Schritte ausgeführt werden:

- für jedes konvexe Trapezoid, das durch 2 benachbarte Dreiecke gebildet wird, die dem Gitternetz des höchsten hierarchischen Niveaus angehören, wird die Summe der mit den beiden Dreiecken verbunden Leuchtdichteabstände berechnet,
- die Diagonale des Trapezoids, die die gemeinsame Kante der beiden Dreiecke bildet, wird invertiert, so daß zwei neue Dreiecke gebildet werden,
- der Leuchtdichteabstand wird für jedes der neuen Dreiecke berechnet und zusammenaddiert, und
- in dem Gitternetze werden die beiden Dreiecke zurückbehalten, deren Summe der Leuchtdichteabstände am geringsten ist.

**19.** Binäre Abfolgestruktur, die mindestens ein digitales Bild darstellt, das nach einem Kodierungsverfahren gemäß einem der Ansprüche 1 bis 18 codiert wurde.

**20.** Codierungsverfahren eines digitalen Bildes, **dadurch gekennzeichnet, daß** es einen Dekompressionsschritt der Daten der binären Abfolge enthält, der durch das Codierungsverfahren nach Anspruch 9 erzeugt wurde.

FIG.1A

FIG.1B

FIG.2

FIG.3

FIG.4

11101110000000011

FIG.5

FIG.6

FIG.7

FIG.8A

FIG.8B